# EUROPÄISCHE PATENTSCHRIFT

(11) **EP 2 478 081 B1**
(45) Veröffentlichungstag und Bekanntmachung des Hinweises auf die Patenterteilung: **14.08.2019**
(21) Anmeldenummer: 10739841.4
(22) Anmeldetag: 22.06.2010
(51) Int. Cl.: C11C 1/08, C11C 3/00, C10L 1/02

(54) **VERFAHREN ZUR REINIGUNG VON STARK MIT VERSEIFUNGSPRODUKTEN BELASTETEM FETTSÄUREALKYLESTER**
METHOD FOR PURIFYING FATTY ACID ALKYL ESTERS HIGHLY CHARGED WITH SAPONIFICATION PRODUCTS
PROCÉDÉ POUR LA PURIFICATION D'ESTERS ALKYLIQUES D'ACIDES GRAS FORTEMENT CHARGÉS EN PRODUITS DE SAPONIFICATION

(30) Priorität: 15.09.2009 DE 102009041120
(43) Veröffentlichungstag der Anmeldung: 25.07.2012
(73) Patentinhaber: Air Liquide Global E&C Solutions Germany GmbH, 60439 Frankfurt am Main (DE)
(72) Erfinder: BÖNSCH, Rudolf, 55299 Nackenheim (DE); SEIDEL, Eckhard, 60389 Frankfurt am Main (DE); SAFT, Helmut, 61194 Niddatal (DE)
(86) Internationale Anmeldenummer: PCT/DE2010/000702
(87) Internationale Veröffentlichungsnummer: WO 2011/032528

(56) Entgegenhaltungen:
- WO-A1-2007/020465
- WO-A1-2009/065452
- US-A1- 2008 040 970
- Aleks Kac: "The FOOLPROOF way to make biodiesel", , 18. Juni 2008 (2008-06-18), XP002607877, Gefunden im Internet: URL:http://web.archive.org/web/20080618203 012/http://journeytoforever.org/biodiesel_ aleksnew.html [gefunden am 2010-10-29]
- Charles Peterson, Gregory Möller, Randall Haws, Xiulin Zhang, Joseph Thompson and Daryl Reece: "Optimization of a Batch Type Ethyl Ester Process", , 7. Juli 2008 (2008-07-07), XP002607878, Gefunden im Internet: URL:http://web.archive.org/web/20080707050 207/http://journeytoforever.org/biofuel_li brary/ethyl_esters.html [gefunden am 2010-10-29]
- ENCINAR ET AL: "Ethanolysis of used frying oil. Biodiesel preparation and characterization", FUEL PROCESSING TECHNOLOGY, ELSEVIER BV, NL LNKD- DOI:10.1016/J.FUPROC.2007.01.002, Bd. 88, Nr. 5, 31. März 2007 (2007-03-31), Seiten 513-522, XP022011642, ISSN: 0378-3820

## Beschreibung

Die Erfindung betrifft ein Verfahren zur kontinuierlichen Extraktion von Verunreinigungen, insbesondere Verseifungsprodukten, aus einer Fettsäurealkylesterphase durch Mischen mit einer Glycerinphase.

Bei der Umesterung von Ölen oder Fetten pflanzlichen oder tierischen Ursprungs nach einem Verfahren zur Erzeugung von Biodiesel, wie es beispielsweise in DE 10 2006 044 467 A1 beschrieben ist, wird zunächst ein Rohalkylester erhalten, der, je nach Art des eingesetzten Öles oder Fettes, mehr oder weniger stark mit Verunreinigungen belastet ist. Erst durch Abtrennung dieser Verunreinigungen wird aus dem Rohalkylester einsatzfähiger Biodiesel. Diese Verunreinigungen bestehen aus aus dem Öl oder Fett stammenden Schleimstoffresten und aus Verseifungsprodukten, die aus einer Reaktion der im eingesetzten Öl oder Fett enthaltenen Freien Fettsäure, FFA mit dem für die Umesterungsreaktion verwendeten basischen Katalysator, in der Regel NaOH, stammen. Bei der Umesterung bestimmter Ölsorten, wie z. B. Jatrophaöl, reagieren auch die bei der Umesterung erhaltene Fettsäurealkylester mit der als Katalysator eingesetzten Natronlauge und verseifen zum Teil.

Verfahren zur Abtrennung der Verunreinigungen aus der Fettsäurealkylesterphase sind bekannt.

In DE 10 2006 044 467 B4 erfolgt die Reinigung des Rohalkylesters mittels einer Wäsche mit 1 bis 5 %-tiger Salzsäure. Dabei neutralisiert die Säure den basischen Katalysator und spaltet die Seifen, indem sie sie in FFA umwandelt.

Nachteilig an diesem Reinigungsverfahren ist, dass die dabei entstandenen FFA, wegen ihrer, durch die unpolare Kohlenwasserstoffkette ihres Moleküls verursachten, wasserabweisenden Eigenschaft, in der Alkylesterphase verbleiben und nicht in die saure, wässrige Waschphase übergehen. Da FFAs im Biodiesel generell unerwünscht sind, die Norm EN 14214 gibt einen Maximalwert vor, ist dieses Verfahren daher nur anwendbar, wenn die Menge an Verseifungsprodukten im Rohalkylester nicht zu hoch ist.

Dem Fachmann ist auch bekannt, dass das Extrahieren der Verseifungsprodukte aus Fettsäurealkylester mittels pH-neutralem Wasser bei hohen Gehalten an Verseifungsprodukten ebenfalls nicht durchführbar ist. Der Grund dafür ist einmal, dass sich unter diesen Bedingungen bei der notwendigen intensivenVermischung des Fettsäurealkylesters und des Extraktionswassers eine sehr stabile Emulsion bildet, aus der die Abtrennung der Esterphase nur mit großen Esterverlusten erfolgen kann. Auch werden die zur Extraktion verwendeten Anlagen, wie Waschkolonne oder Mischabsetzer, sehr schnell von den Verseifungsprodukten verunreinigt und verstopft.

In DE 43 01 686 C1 wird vorgeschlagen, bei der Reinigung der Fettsäurealkylesterphase auf die Verwendung einer wässrigen Phase ganz zu verzichten und statt dessen zur Entfernung von Verunreinigungen Glycerin zu verwenden. Anschließend soll die Restalkalität der Esterphase durch Behandeln mit einem Adsorptionsmittel, wie Bleicherde oder Kieselsäure entfernt werden.

Als Vorteil wird für dieses Verfahren angegeben, dass es ohne eine Wasserphase und den Aufwand zu deren Aufarbeitung auskommt. Als Nachteil ist aber zu sehen, dass die Aufnahmefähigkeit einer wasserfreien, basischen Glycerinphase für polare Verunreinigungen, wie überschüssiger Alkohol oder Seifen nicht sehr groß ist. Außerdem ist der Einsatz von Adsorptionsmitteln mit erheblichen Kosten verbunden und erzeugt entsorgungsbedürftige Reststoffe.

Die internationale Anmeldeschrift WO 2009/065452 stellt ein Verfahren zur Herstellung von Fettsäuremethylester mit zwei Reinigungsschritten vor. Im ersten Reinigungsschritt wird eine verfahrensintern gewonnene wässrige Glycerinphase als Waschflüssigkeit verwendet, der zweite Reinigungsschritt besteht aus der Zugabe einer wässrigen Säure und einer Wasserwäsche.

Die internationale Anmeldeschrift WO 2007/020465 stellt ebenfalls ein Verfahren zur Herstellung von Fettsäuremethylester mit zwei Reinigungsschritten vor. Im ersten Reinigungsschritt wird eine verfahrensintern gewonnenes Glycerin als Waschflüssigkeit verwendet, der zweite Reinigungsschritt besteht aus der Zugabe von Zitronensäure und einer anschließenden Wasserwäsche.

In der Schrift The FOOLPROOF way to make biodiesel, Aleks Kac, 18. Juni 2008, XP002607877 wird ein weiteres Verfahren zur Herstellung von Fettsäuremethylester mit zwei Reinigungsschritten vorgestellt. Im ersten Reinigungsschritt wird eine verfahrensintern gewonnenes, mit Phosphorsäure angereichertes Glycerin als Waschflüssigkeit verwendet, der zweite Reinigungsschritt besteht aus einer Wasserwäsche, wobei das Waschwasser ebenfalls mit Phosphorsäure angereichert wird.

Weil die vorstehend beschriebenen Verfahren zur Reinigung von stark mit Verseifungsprodukten beladenem Fettsäurealkylester aus technischen oder wirtschaftlichen Gründen nicht geeignet sind, bestand daher die Aufgabe, ein Verfahren zur Vorreinigung zur Verfügung zu stellen, mit dem die Seifenbeladung soweit gesenkt werden kann, dass zur weiteren Reinigung eines der bekannten Verfahren einsetzbar ist.

Die Aufgabe wird erfindungsgemäß gelöst, indem zur Reinigung die Fettsäurealkylesterphase mit einer sauren, wässrigen Glycerinphase, im Folgenden Wasch-Glycerinphase genannt, vermischt wird, die Glycerin und 5 bis 40 Gew-% Wasser und, als Komplexbildner, Zitronensäure enthält und deren pH-Wert zwischen 3 und 6, vorzugsweise zwischen 4 und 5 liegt, wobei die wässrige Glycerinphase prozessintern gewonnen wird und wobei das Verfahren mittels einer Extraktionskolonne durchgeführt wird, wobei die Fettsäurealkylesterphase in der Kolonne von unten nach oben und in der Glycerinphase fließt.

Weiterbildungen, Vorteile und Anwendungsmöglichkeiten der Erfindung ergeben sich auch aus der nachfolgenden Beschreibung. Dabei bilden alle beschriebenen Merkmale für sich oder in beliebiger Kombination den Gegenstand der Erfindung, unabhängig von ihrer Zusammenfassung in den Ansprüchen oder deren Rückbeziehung.

Die in der Wasch-Glycerinphase enthaltene Säure neutralisiert den basischen Umesterungskatalysator und verhindert damit eine weitere Verseifung des Esters. Der Komplexbildner, Zitronensäure, dient dazu, mehrwertige Erdalkalikationen, die mit dem Öl oder Fett in den Umesterungsprozess eingetragen wurden, wie Ca-, Mg-, Fe- und Cu-Ionen, zu Komplexen zu binden und damit die Bildung von, sowohl in der Ester- als auch in der Wasch-Glycerinphase, schlecht löslichen Erdalkaliseifen zu verhindern.

Durch den Wasseranteil wird die Polarität der Wasch-Glycerinphase erhöht und damit die Aufnahmefähigkeit für die aus der Esterphase zu entfernenden Seifen und anderer polarer Verunreinigungen, wie z.B. überschüssiges Methanol oder Ethanol.

Eine besonders vorteilhafte Verwendung dieses Verfahrens besteht darin, es in eine Anlage zur Herstellung von Biodiesel durch Umesterung von pflanzlichen oder tierischen Ölen oder Fetten zu integrieren und die zur Extraktion verwendete Wasch-Glycerinphase prozessintern zu gewinnen. Dabei wird dem erfindungsgemäßen Verfahren die zu reinigende Fettsäurealkylesterphase, direkt oder über einen Zwischenspeicher, über einen Wärmetauscher aus dem Absetzbehälter der letzten Umesterungsstufe zugeführt. Die erfindungsgemäß verwendete Wasch-Glycerinphase wird prozessintern gewonnen durch Aufarbeitung der bei der Umesterung entstandene Glycerinphase. Dabei wird diese mittels einer sauren Wasserwäsche von Verseifungsprodukten gereinigt und destillativ von Methanol oder Ethanol befreit. In einer weiteren Destillationsbehandlung wird der für die Verwendung im erfindungsgemäßen Verfahren erforderliche Wassergehalt der Glycerinphase eingestellt. Daran anschließend wird der pulverförmige Komplexbildner in der Glycerinphase gelöst. Vorzugsweise werden dafür, um einen kontinuierlichen Betrieb zu ermöglichen, zwei parallel betriebenen Ansetzbehälter - bzw. Ansetzsysteme verwendet. Von dort aus wird die Glycerinphase als Wasch-Glycerinphase dem erfindungsgemäßen Verfahren zugeführt.

Die nach dem erfindungsgemäßen Verfahren gereinigte Fettsäurealkylesterphase wird anschließend mittels einer sauren Wasserwäsche von restlichen Verseifungsprodukten befreit und durch Ausdampfen des Wassergehaltes getrocknet und liegt damit als gebrauchsfertiger Biodiesel vor.

Das Mischen der Fettsäurealkylester- und der Wasch-Glycerinphase erfolgt mittels einer Extraktionskolonne, wobei die Fettsäurealkylesterphase in der Kolonne von unten nach oben in der Wasch-Glycerinphase aufsteigt.

Alternativ zur Verwendung einer Extraktionskolonne ist es möglich, dass das Verfahren im Gegenstrom mittels eines mindestens zweistufigen, vorzugsweise dreistufigen Mischabsetzers durchgeführt wird, wobei vorzugsweise in die Rohrleitung integrierte, mechanische Intensivvermischer verwendet werden. Vorteilhaft ist es, das Verfahren bei Umgebungsdruck durchzuführen, die Behältnisse mit Stickstoff zu überlagern und die Fettsäurealkylesterphase mit einer Temperatur zwischen 40 und 70°C, insbesondere zwischen 55 und 65°C dem Verfahren zuzuführen. Niedrigere Temperaturen würden die Viskosität der Ester- und der Wasch-Glycerinphase erhöhen und damit die intensive Vermischung der Phasen und damit die Effektivität des Verfahrens verringern. Höhere Temperaturen dagegen würden zu einer verstärkten Ausgasung von Methanol aus der Esterphase führen und damit Explosionsgefahr hervorrufen.

Die Erfindung wird durch folgende Beispiele erläutert:

### Beispiel 1

Zur Durchführung der Reinigung von Fettsäuremethylester, gewonnen mittels eines zweistufigen Umesterungsprozesses aus Jatrophaöl, wird eine Extraktionskolonne mit einem inneren Durchmesser von 5 cm und einer Gesamthöhe von 1,5 m verwendet. Die Kolonne enthält eine strukturierte Packung vom Typ Montz M/MN, B-1 mit einer spezifischen Oberfläche von 250 m²/m³, hergestellt aus Polypropylen. Die Höhe der strukturierten Packung beträgt 1,0 m. Am Kopf der Kolonne befindet sich der Zulauf des Extraktionsmittels, der Glycerinphase, mit der die Kolonne gefüllt ist. Die Glycerinphase enthält, neben Glycerin, 15 Gew-% Wasser und ist mit Zitronensäure versetzt. Durch die Zugabe der Zitronensäure wird der pH-Wert auf den Wert 6 eingestellt. Der kontinuierliche Zufluss an Glycerinphase zur Kolonne beträgt 125 g/Stunde.

Der Ablauf des Extrakts, der beladenen Glycerinphase, befindet sich am Fuß der Kolonne, am tiefsten Punkt. Am Kolonnenfuß, unterhalb der strukturierten Packung, wird die zu reinigende Fettsäuremethylesterphase zugeleitet und steigt, zu Tropfen zerteilt, innerhalb der Glycerinphase, zum Kopf der Kolonne auf, und wird am höchsten Punkt aus der Kolonne abgezogen. Der kontinuierliche Zufluss des Fettsäuremethylesters beträgt 2.500 g/Stunde. Da der Umesterungsprozess basisch katalysiert wurde, weist die Esterphase einen pH-Wert von 9 auf, enthält 4 Gew-% Verseifungsprodukte, 9 Gew-% Methanol, 0,4 Gew-% Gesamtglycerin und 100 ppm Wasser. Der am Kolonnenkopf austretende, gereinigte Fettsäuremethylesterstrom beträgt 2168 g/Stunde. Er enthält 0,05 Gew-% Verseifungsprodukte, 1 Gew-% Methanol, 0,35 Gew-% Gesamtglycerin und 0,2 Gew-% Wasser und hat einen pH-Wert von 7. Die Extraktion wurde bei atmosphärischem Druck und bei 65°C durchgeführt. Es bildeten sich keine erkennbaren Ablagerungen von Verseifungsprodukten in der Kolonne.

### Beispiel 2 (nicht gemäß der Erfindung)

An Stelle der in Beispiel 1 verwendeten Extraktionskolonne, wird in diesem Beispiel ein dreistufiger Mischabsetzer verwendet. Das Mischen erfolgt in jeder Stufe mittels eines in die Rohrleitung integrierten Intensivvermischers des Typs ULTRA TURRAX UTL. Die Verweilzeit in den drei Absetzbehältern beträgt jeweils eine Stunde. Die in den Mischabsetzer eintretenden Stoffströme haben die gleiche Zusammensetzung und Größe wie in Beispiel 1. Dem Mischer der ersten Mischabsetzerstufe wird der zu reinigende Fettsäuremethylesterstrom und der Strom der Glycerinphase aus dem Absetzbehälter der zweiten Mischabsetzerstufe zugeführt. Die Temperatur des Fettsäuremethylesterstroms beträgt 65°C. Dem Mischer der dritten Mischabsetzer stufe wird die als Extraktionsmittel zum Einsatz kommende Glycerinphase und die Esterphase aus dem Absetzbehälter der zweiten Mischabsetzerstufe zugeführt. Mittels eines zwischen dem Mischer und dem Absetzbehälter der dritten Mischabsetzerstufe installierten Wärmetauschers wird die Temperatur des Gemischs auf 25°C gesenkt, um die Löslichkeit des Fettsäuremethylesters in der Glycerinphase, und damit den Verlust an Fettsäuremethylester, zu senken. Den Absetzbehälter der dritten Mischabsetzerstufe verlässt daher die gereinigte Fettsäuremethylesterphase mit einem Strom von 2.190 kg/Stunde und in der gleichen Zusammensetzung wie in Beispiel 1.

## Patentansprüche

1. Verfahren zur kontinuierlichen Extraktion von Verunreinigungen, insbesondere Verseifungsprodukten, aus einer Fettsäurealkylesterphase durch Mischen mit einer Glycerinphase, **dadurch gekennzeichnet, dass** die eingemischte Glycerinphase 5 bis 40 Gew-% Wasser und, als Komplexbildner, Zitronensäure enthält und ihr pH-Wert 3 bis 6, vorzugsweise 4 bis 5 beträgt, wobei die wässrige Glycerinphase prozessintern gewonnen wird und wobei das Verfahren mittels einer Extraktionskolonne durchgeführt wird, wobei die Fettsäurealkylesterphase in der Kolonne von unten nach oben und in der Glycerinphase fließt.

2. Verfahren gemäß Anspruch 1, **dadurch gekennzeichnet, dass** das Verfahren im Gegenstrom mittels eines mindestens zweistufigen, bevorzugt dreistufigen Mischabsetzers erfolgt, wobei vorzugsweise in die Rohrleitung integrierte, mechanische Intensivvermischer verwendet werden.

3. Verfahren gemäß Anspruch 1, **dadurch gekennzeichnet, dass** die Fettsäurealkylesterphase mit einer Temperatur zwischen 40 und 70°C, bevorzugt zwischen 55 und 65°C dem Verfahren zugeführt wird.

4. Verfahren gemäß Anspruch 1, **dadurch gekennzeichnet, dass** das Verfahren bei Umgebungsdruck durchgeführt wird und die Behältnisse mit Stickstoff überlagert werden.

## Claims

1. Process for continuous extraction of impurities, in particular saponification products, from a fatty acid alkyl ester phase by mixing with a glycerol phase, **characterized in that** the mixed-in glycerol phase contains 5% to 40% by weight of water and citric acid as a complex former and has a pH of 3 to 6, preferably 4 to 5, wherein the aqueous glycerol phase is obtained from a source internal to the process and wherein the process is performed using an extraction column, wherein the fatty acid alkyl ester phase flows from bottom to top and in the glycerol phase in the column.

2. Process according to Claim 1, **characterized in that** process is carried out in countercurrent using an at least two-stage, preferably three-stage, mixer-settler, wherein mechanical intensive mixers preferably integrated into the pipeline are used.

3. Process according to Claim 1, **characterized in that** the fatty acid alkyl ester phase is supplied to the process at a temperature between 40°C and 70°C, preferably between 55°C and 65°C.

4. Process according to Claim 1, **characterized in that** the process is performed at ambient pressure and the vessels are blanketed with nitrogen.

## Revendications

1. Procédé d'extraction continue d'impuretés, notamment de produits de saponification, d'une phase ester alkylique d'acide gras, par mélange avec une phase glycérine, **caractérisé en ce que** la phase glycérine incorporée contient 5 à 40 % en poids d'eau et de l'acide citrique en tant que complexant, et son pH est de 3 à 6, de préférence de 4 à 5, la phase glycérine aqueuse étant obtenue au sein du procédé et le procédé étant réalisé au moyen d'une colonne d'extraction, la phase ester alkylique d'acide gras s'écoulant dans la colonne du bas vers le haut et dans la phase glycérine.

2. Procédé selon la revendication 1, **caractérisé en ce que** le procédé a lieu à contre-courant au moyen d'un mélangeur-décanteur au moins à deux étages, de préférence à trois étages, des mélangeurs mécaniques intensifs intégrés dans la canalisation étant de préférence utilisés.

3. Procédé selon la revendication 1, **caractérisé en ce que** la phase ester alkylique d'acide gras est introduite dans le procédé à une température comprise entre 40 et 70 °C, de préférence entre 55 et 65 °C.

4. Procédé selon la revendication 1, **caractérisé en ce que** le procédé est réalisé à la pression ambiante et les contenants sont recouverts avec de l'azote.
